# EUROPEAN PATENT SPECIFICATION

(11) **EP 3 495 301 B1**
(45) Date of publication and mention of the grant of the patent: **02.07.2025**
(21) Application number: 18210554.4
(22) Date of filing: 05.12.2018
(51) Int. Cl.: B66B 1/46, H04W 4/029, H04W 4/33, H04W 4/80

(54) **AUTOMATICALLY OBTAINING FLOOR INFORMATION**
AUTOMATISCHES ERHALTEN VON BODENINFORMATIONEN
OBTENTION AUTOMATIQUE D'INFORMATIONS DE PLANCHER

(30) Priority: 05.12.2017 CN 201711265568
(43) Date of publication of application: 12.06.2019
(73) Proprietor: Otis Elevator Company, Farmington, Connecticut 06032 (US)
(72) Inventor: LI, Kai, PuDong, Shanghai (CN); WANG, Shenhong, PuDong, Shanghai (CN)
(74) Representative: Dehns

(56) References cited:
- US-A1- 2006 144 644
- US-A1- 2015 210 505
- US-A1- 2016 376 124

## Description

### Technical Field

The present invention belongs to the field of Elevator technologies, and relates to automatic acquisition of floor information.

### Background Art

To improve the experience of passengers, a wireless terminal module is mounted and set in an Elevator system to interact with personal mobile terminals carried by passengers, thus implementing an automatic call function or the like.

A personal mobile terminal usually needs to acquire current floor information of the personal mobile terminal. The floor information is an information basis for further implementing corresponding intelligent functions.

US2016/376124 A1 describes a method for operating an elevator installation where a mobile radio is used to perform operator control actions. The mobile radio receives relevant data in the form of an identification code.

### Summary of the Invention

According to a first aspect of the present invention, an elevator system is provided according to claim 1.

Optionally, the radio signal apparatus is configured to acquire, from an elevator controller of the elevator system, a floor on which the radio signal apparatus is currently located.

Optionally, an identity setting unit is disposed in the radio signal apparatus, and is configured to write floor information acquired from the elevator controller into the floor information bit of the identity.

Optionally, the radio signal apparatus is a Bluetooth module or a BLE module.

Optionally, the elevator system further comprises a radio signal apparatus mounted in a landing area, wherein the radio signal apparatus mounted in the landing area is configured to broadcast an identity of the radio signal apparatus mounted in the landing area, wherein the identity comprises a floor information bit, and the floor information bit is used to indicate floor information of the radio signal apparatus mounted in the landing area.

Optionally, the radio signal apparatus mounted in the landing area is configured to acquire, from the elevator controller, a floor on which the radio signal apparatus mounted in the landing area is currently located.

Optionally, an identity setting unit is disposed in the radio signal apparatus mounted in the landing area, and is configured to write floor information acquired from the elevator controller into the floor information bit of the identity.

Optionally, the radio signal apparatus mounted in the landing area is a Bluetooth module or a Bluetooth Low Energy (BLE) module.

According to a second aspect of the present invention, a method for an elevator system is provided in accordance with claim 9.

The foregoing features and operations of the present invention will become more obvious according to the following descriptions and accompanying drawings.

### Brief Description of the Drawings

The foregoing and other objectives and advantages of the present invention will become more complete and clearer through the following detailed descriptions with reference to the accompanying drawings, where identical or similar elements are represented by using identical reference numerals.
FIG. 1 is a schematic diagram of a system according to an embodiment of the present invention, where a radio signal apparatus and a personal mobile terminal interacting with the radio signal apparatus in an embodiment of the present invention are provided;
FIG. 2 is a schematic structural diagram of a radio signal apparatus according to an embodiment of the present invention;
FIG. 3 is a schematic diagram of an application scenario of the system in the embodiment shown in FIG. 1;
FIG. 4 is a schematic diagram of another application scenario of the system in the embodiment shown in FIG. 1;
FIG. 5 is a flowchart of a method according to an embodiment of the present invention, where FIG. 5(a) shows a method procedure performed by a radio signal apparatus in the embodiment of the present invention, and FIG. 5(b) shows a method procedure performed by a personal mobile terminal in the embodiment of the present invention; and
FIG. 6 is a flowchart of a method according to another embodiment of the present invention, where FIG. 6(a) shows a method procedure performed by a radio signal apparatus in the another embodiment of the present invention, and FIG. 6(b) is a method procedure performed by a personal mobile terminal in the another embodiment of the present invention.

### Detailed Description

Exemplary embodiments of the present invention are described below. Examples of these embodiments are illustrated in the accompanying drawings. Whenever possible, identical reference numerals will be used to represent identical or similar components in all the accompanying drawings.

For the purpose of simplicity and descriptiveness, the principles of the present invention are mainly described herein with reference to the exemplary embodiments of the present invention. However, those skilled in the art will easily understand that the same principles may be equivalently applied to all types of radio signal apparatuses and personal mobile terminals, systems using the radio signal apparatuses and personal mobile terminals, and/or methods correspondingly performed by the radio signal apparatuses and personal mobile terminals, in which these same principles can be implemented, and any change of this type does not depart from the actual spirit and scope of the present patent application. Moreover, reference is made to the accompanying drawings in the following descriptions. Specific exemplary embodiments are illustrated in these accompanying drawings. Electrical, mechanical, logical, and structural changes can be made to these embodiments without departing from the spirit and scope of the present invention. In addition, the features of the present invention are disclosed with reference to only one of several implementations/embodiments. However, provided that a feature may be expected and/or beneficial for any given or recognizable function, this feature may be combined with one or more other features in other implementations/embodiments. Therefore, the following descriptions should not be considered to be limitative, and the scope of the present invention is defined by the appended claims and equivalents thereof.

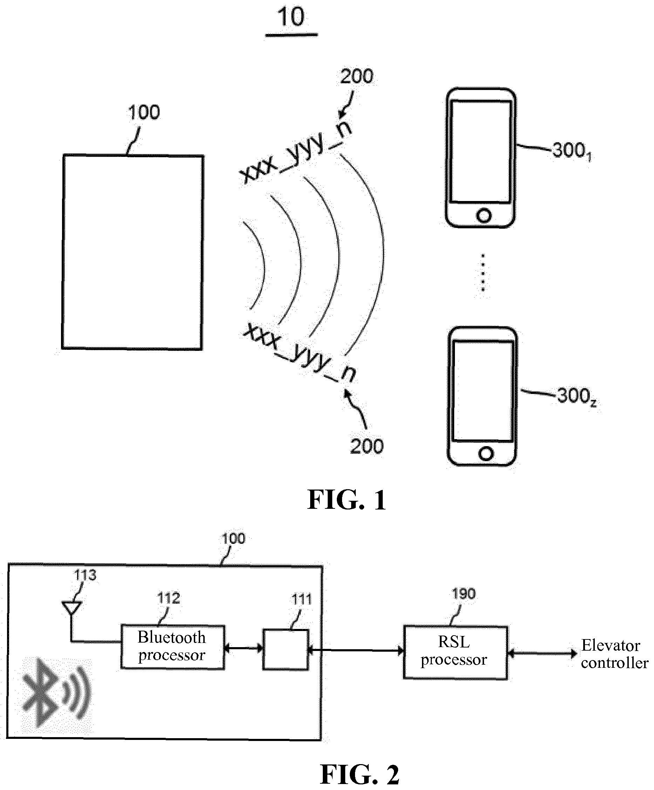

FIG. 1 is a schematic diagram of a system according to an embodiment of the present invention, where a radio signal apparatus and a personal mobile terminal interacting with the radio signal apparatus in an embodiment of the present invention are provided. The system 10 shown in FIG. 1 may be a communications system for an elevator system, and is, for example, used as a part of the communications system for the elevator system. The system 10 may implement communication exchange between a radio signal apparatus 100 and a personal mobile terminal 300 in the embodiment of the present invention. In an embodiment, the radio signal apparatus 100 can establish a communication connection to an elevator controller of the elevator system by using, for example, a Remote Serial Link (RSL) processor. The radio signal apparatus 100 may send or broadcast a radio signal, and the personal mobile terminal 300 may receive the radio signal and may establish a wireless connection to the radio signal apparatus 100 according to a requirement, so as to implement communication exchange between the radio signal apparatus 100 and the personal mobile terminal 300.

As shown in FIG. 1, an identity (ID) 200 is configured for the radio signal apparatus 100. The radio signal apparatus 100 may broadcast the identity 200. The identity 200 includes a floor information bit. The floor information bit is used to indicate floor information of the radio signal apparatus 100. Specifically, in a definition form of the identity 200 in an example shown in FIG. 1, "xxx" in the identity 200 indicates an identifier bit, and may be, for example, a universally unique identifier (UUID). An identifier bit of the identity 200 of each radio signal apparatus 100 in the elevator system may be uniformly preallocated. For example, if the radio signal apparatus 100 is mounted in an elevator car, the identifier "xxx" may be set based on an identity of the elevator car. "yyy" in the identity 200 indicates a type of the radio signal apparatus 100. For example, if the radio signal apparatus 100 is a BLE module, "yyy" may be set to "BLE". "n" in the identity 200 is a floor information bit at the end, and indicates the floor information of the radio signal apparatus 100. For example, if n=5, it indicates that the radio signal apparatus 100 is on the 5^{th} floor.

At the same time when an antenna of the radio signal apparatus 100 broadcasts a radio signal, the identity 200 is broadcasted continuously or at predetermined time intervals. Correspondingly, the personal mobile terminal 300 in this embodiment of the present invention may continuously or intermittently scan for a radio signal, so as to acquire a current selectable radio signal for establishing a wireless connection. For example, if entering the coverage area of a radio signal broadcasted by the radio signal apparatus 100, the personal mobile terminal 300 may automatically detect the radio signal.

Each personal mobile terminal 300 in the embodiment of the present invention can perform, without establishing a connection to the radio signal apparatus 100, a scan to recognize the identity 200 broadcasted by the radio signal apparatus 100, so that the personal mobile terminal 300 can acquire current floor information (for example, the "n^{th} floor") of the personal mobile terminal 300 based on the floor information bit (for example, "n") in the recognized identity 200. As such, the personal mobile terminal 300 applied to the communications system in the embodiment of the present invention may obtain the current floor information of the personal mobile terminal 300 without establishing a connection to the radio signal apparatus 100.

Specifically, in an embodiment, a wireless communications unit (for example, a Bluetooth communications module) is configured in each personal mobile terminal 300. The wireless communications unit scans for nearby radio signals, and performs scans to recognize an identity 200 in each radio signal. A corresponding component may be disposed in the wireless communications unit to acquire the floor information indicated by the floor information bit in the identity 200, or may send the identity 200 to a corresponding component (for example, a processor) of the personal mobile terminal 300 to analyze the floor information bit in the identity 200 and acquire the floor information indicated by the floor information bit, so as to acquire the current floor information of the personal mobile terminal 300.

Therefore, in the system 10 in the foregoing embodiments, each personal mobile terminal 300 may acquire current floor information of the personal mobile terminal 300 without establishing a connection to a corresponding radio signal apparatus 100. In other words, a currently processed floor location can be automatically acquired as long as the personal mobile terminal 300 can detect or sense a radio signal. As such, it is possible that the personal mobile terminal 300 does not need to occupy the connection capacity at a moment or continuously. This is particularly significant if the radio signal apparatus 100 corresponds to a relatively large quantity of personal mobile terminals 300 (for example, when a quantity z of personal mobile terminals 300₁ to 300_{z} shown in FIG. 1 is very large). It is unnecessary for each personal mobile terminal 300 to establish a wireless connection to the radio signal apparatus 100, so as to achieve fast response. Each personal mobile terminal 300 may rapidly acquire the floor information. Alternatively, this is particularly significant if the radio signal apparatus 100 needs to be connected to one or more personal mobile terminals 300 to implement other functions (for example, each personal mobile terminal 300 needs to establish a connection to the radio signal apparatus 100 to send a call request command and/or a destination-floor registration command from the personal mobile terminal 300). As such, as the connection capacity is not occupied, the connection between the personal mobile terminal 300 and the radio signal apparatus 100 is not hindered, so that the implementation of the foregoing other functions is not hindered.

In an embodiment, the radio signal apparatus 100 is a Bluetooth module, and is specifically, for example, a BLE module that can broadcast a Bluetooth signal. Correspondingly, it is chosen that the wireless communications unit of the personal mobile terminal 300 is disposed as the Bluetooth communications module. The Bluetooth communications module and the Bluetooth module may perform Bluetooth interaction and communication based on a Bluetooth 4.0 protocol. The Bluetooth module may perform scans and establish connections, so as to sequentially establish a Bluetooth connection to each of a plurality of personal mobile terminals 300. As such, each personal mobile terminal 300 can implement a corresponding function such as a call request function and/or a destination-floor registration function by using the Bluetooth module. The Bluetooth module has relatively limited connection capacity. Therefore, the system 10 in the foregoing embodiments has a more obvious effect if the radio signal apparatus 100 is a Bluetooth module.

FIG. 2 is a schematic diagram of a modular structure of a radio signal apparatus 100 according to an embodiment of the present invention. In the embodiment shown in FIG. 2, the radio signal apparatus 100 is a Bluetooth module 100, and has an identity setting unit 111, a Bluetooth processor 112, and an antenna 113. The identity setting unit 111 may set an identity 200 of the radio signal apparatus 100, and particularly, set a floor information bit of the identity 200. In an embodiment, the floor information bit of the identity 200 is fixed (for example, when the radio signal apparatus 100 is fixedly mounted in a landing area), and the identity setting unit 111 sets the identity 200 that no longer changes. In another embodiment, the floor information bit of the identity 200 changes dynamically (for example, when the radio signal apparatus 100 is fixedly mounted in an elevator car), and the identity setting unit 111 can dynamically acquire current floor information of the radio signal apparatus 100 from an elevator system, and dynamically write the floor information into the floor information bit of the identity 200.

In an embodiment, as shown in FIG. 2, the identity setting unit 111 may establish a communication connection to an elevator controller of the elevator system by using, for example, an RSL processor 190, so that the floor information of the radio signal apparatus 100 can be conveniently acquired.

It should be noted that a specific type of the radio signal apparatus 100 is not limited to a Bluetooth module in the foregoing embodiments. For example, the radio signal apparatus may further be another type of radio signal apparatus such as a Wifi module, or another radio signal apparatus similar to the Bluetooth module known to those skilled in the art. It will be understood that another radio signal apparatus that appears after the filing date of the present application and is similar to the Bluetooth module may also be alternatively applied to the present invention to implement the objectives and solutions of the present invention.

The present invention provides an elevator system to which the system 10 in the foregoing embodiments is applied.

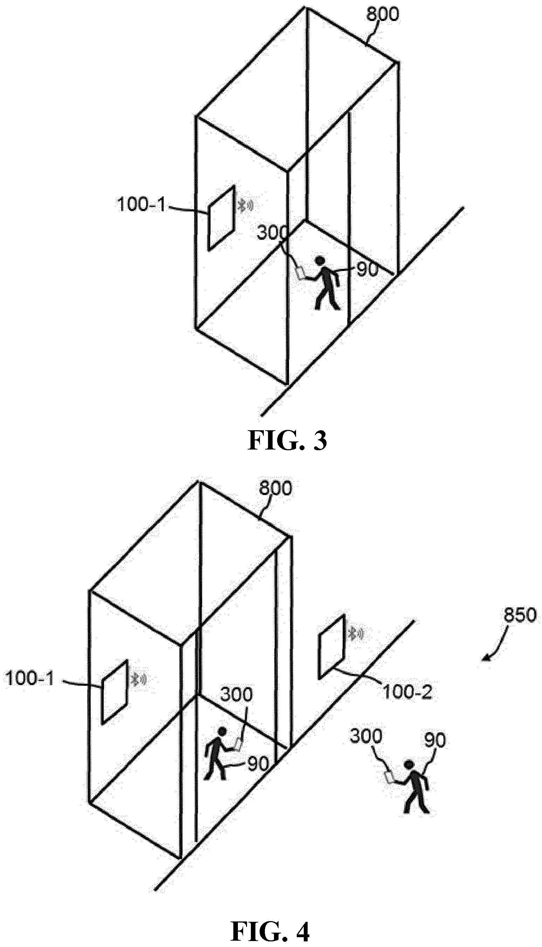

In an embodiment of the elevator system, as shown in FIG. 3, the radio signal apparatus 100-1 in the embodiment shown in FIG. 1 of the present invention is disposed in an elevator car 800 of the elevator system (for example, the radio signal apparatus 100-1 and a destination-floor registration control panel are integrally mounted). The radio signal apparatus 100-1 may be a BLE module and can broadcast a radio signal such as a Bluetooth signal to at least cover the internal area of the elevator car 800. The radio signal apparatus 100-1 may establish a wireless connection (for example, a Bluetooth connection) to a personal mobile terminal 300 based on the radio signal broadcasted by the radio signal apparatus 100-1, and receive, when the wireless connection is established, a destination-floor registration command sent from the personal mobile terminal 300. As such, when approaching or entering the elevator car 800, a passenger 90 carrying the personal mobile terminal 300 can register a destination floor in an operation-free manner. The passenger 90 does not need to manually register a destination floor on the destination-floor registration control panel in the elevator car 800, or does not need to manually register a destination floor on the personal mobile terminal 300.

In an embodiment of the elevator system, as shown in FIG. 4, the radio signal apparatus 100-2 in the embodiment shown in FIG. 1 of the present invention is disposed in a landing area 850 of the elevator system. The radio signal apparatus 100-2 may be a BLE module (for example, the radio signal apparatus 100-2 and a call control panel are integrally mounted), and can broadcast a radio signal such as a Bluetooth signal to at least cover the landing area 850. The radio signal apparatus 100-2 may establish a wireless connection (for example, a Bluetooth connection) to the personal mobile terminal 300 based on the Bluetooth signal broadcasted by the radio signal apparatus 100-2, and receive, when the wireless connection is established, a call request command about a call direction (for example, upward or downward) sent from the personal mobile terminal 300. As such, when approaching or entering the landing area 850, the passenger 90 carrying the personal mobile terminal 300 can complete a call request in an operation-free manner. The passenger 90 does not need to manually register a call operation on the call control panel in the landing area 850, or does not need to manually register a call operation on the personal mobile terminal 300.

In an alternative embodiment, the radio signal apparatus 100-2 shown in FIG. 4 may also receive a call request command about a call direction and a destination floor sent from the personal mobile terminal 300. As such, the registration of a destination floor can be completed without depending on the radio signal apparatus 100-1 of the elevator car 800.

In the elevator system 10 in an embodiment of the present invention, the connection capacity provided by the radio signal apparatus 100 may be used as much as possible to establish a wireless connection during the foregoing automatic elevator service request, so that it can be ensured that the function of the foregoing automatic elevator service request is completed in a timely and successful manner and passengers have desirable call experience.

With reference to FIG. 1 and FIG. 3, an example of the application of the system 10 in the embodiment of the present invention is described.

As shown in FIG. 3, the radio signal apparatus 100-1 (for example, a BLE module) is mounted in the elevator car 800, and broadcasts a Bluetooth signal or the like. A passenger 90 who enters the elevator car 800 needs to establish a Bluetooth connection to the radio signal apparatus 100-1 by using a personal mobile terminal 300 carried by the passenger 90 and send a destination-floor registration command by using the personal mobile terminal 300. The radio signal apparatus 100-1 may receive the command and forward the command to an elevator controller (not shown) connected to the radio signal apparatus 100-1, so as to complete a process of registering a destination floor. A plurality of passengers 90 may enter the elevator car 800 at the same time; therefore, the foregoing registration process of each passenger 90 should be efficiently completed as soon as possible. If the radio signal apparatus 100-1 is still establishing a Bluetooth connection to the personal mobile terminal 300 of each passenger 90 that is already in the elevator car 800 before to send current floor information of the radio signal apparatus 100-1, it should be understood that first the Bluetooth connection process is time consuming, and an actual floor may have already changed when a personal terminal of a passenger 90 receives the floor information. Especially, the Bluetooth connection occupies the connection capacity of the radio signal apparatus 100-1, and the registration of a destination floor by a personal mobile terminal 300 of another passenger 90 who newly enters is affected or hindered.

The radio signal apparatus 100-1 continuously broadcasts a current identity 200 of the radio signal apparatus 100-1. The identity 200 carries a floor information bit indicating the floor information of the radio signal apparatus 100-1 (that is, indicating floor information of the elevator car 800). Therefore, the personal mobile terminal 300 of each passenger 90 can perform, without establishing a Bluetooth connection to the radio signal apparatus 100-1, a scan to recognize the identity broadcasted by the radio signal apparatus 100-1, and acquire, based on the floor information bit in the recognized identity, the current floor information of the elevator car 800, that is, current floor information of the personal mobile terminal 300.

As the elevator car 800 continuously goes up or down, the floor information of the elevator car 800 definitely changes dynamically. The floor information bit (for example, "n") of the identity 200 of the radio signal apparatus 100-1 may dynamically change accordingly. As such, the floor information bit of the identity 200 changes as a floor on which the radio signal apparatus 100-1 is located changes. Correspondingly, the personal mobile terminal 300 performs a scan to recognize the dynamically changed floor information bit of the identity broadcasted by the radio signal apparatus 100-1, so that the personal mobile terminal 300 of the passenger 90 may dynamically acquire the current floor information of the personal mobile terminal 300.

In an embodiment, a reminder unit may be disposed in the personal mobile terminal 300. When the acquired floor information is close or equal to destination floor information (the destination floor information is known in the personal mobile terminal 300), the reminder unit reminds a passenger 90 using the personal mobile terminal 300, for example, sends a vibration and/or sound prompt signal, to remind the passenger 90 to leave the elevator car 800 or prepare to leave the elevator car 800. To judge whether the acquired floor information is close to the destination floor information, a condition of "close" may be defined according to a factor such as a travel speed of the elevator car. For example, when an absolute value of a difference between the currently acquired floor information and the destination floor information is less than or equal to 1 to 2, it is determined that the acquired floor information is close to the destination floor information.

In another alternative embodiment, a reminder unit may be disposed in or coupled to the radio signal apparatus 100-1. The reminder unit broadcasts reminder information in a sound form when the acquired floor information is close or equal to destination floor information (the destination floor information is known in the radio signal apparatus 100-1) registered by any passenger.

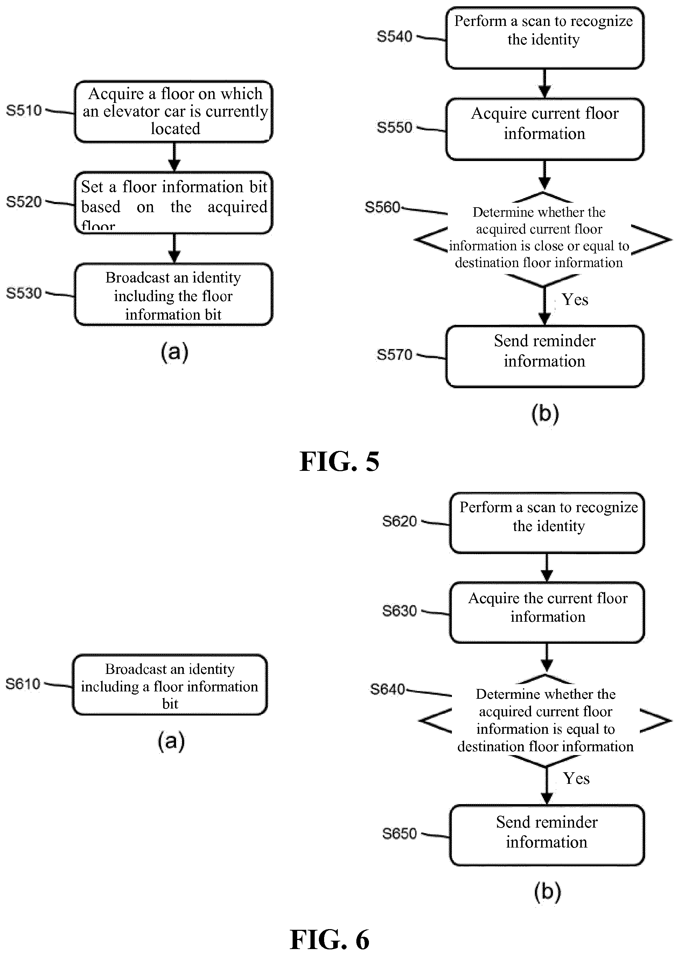

An example of a method in an embodiment of the present invention is described below with reference to FIG. 3 and FIG. 5.

First, as shown in FIG. 5, in step S510, a floor on which an elevator car 800 is currently located is acquired. Specifically, a radio signal apparatus 100-1 coupled to an elevator controller of an elevator system may acquire current floor information of the elevator car 800 (no matter the elevator car 800 is travelling or is stopped) from the elevator controller at any time.

In step S520, a floor information bit in an identity 200 of the radio signal apparatus 100-1 is changed based on the acquired floor. For example, the floor information bit "n" is equal to the floor on which the elevator car 800 is currently located. Therefore, the floor information bit "n" may be dynamically changed and set.

In step S530, the identity 200 including the floor information bit is broadcasted. It should be understood that when the floor information bit "n" changes, the floor information bit "n" in the identity 200 broadcasted by the radio signal apparatus 100-1 definitely changes synchronously.

The foregoing steps S510 to S530 may be implemented in the radio signal apparatus 100-1 of the elevator car 800. In a personal mobile terminal 300, the following steps are performed:
In step S540, a scan is performed to recognize the identity 200 broadcasted by the radio signal apparatus 100-1 without establishing a connection (for example, a Bluetooth connection) to the radio signal apparatus 100-1. It should be understood that the dynamically changing identity 200 can be dynamically recognized through scanning.

In step S550, the current floor information is acquired based on the floor information bit in the recognized identity 200. It should be understood that the dynamically changing floor information bit can be dynamically recognized and acquired, so that the current floor information can be dynamically acquired. As such, the personal mobile terminal 300 can rapidly and conveniently acquire current floor information of the personal mobile terminal 300.

In an example of the application of the acquired floor information, the method further include step S560. In step S560, it is determined, for example, by comparing the acquired current floor information with destination floor information, whether the acquired current floor information is close or equal to the destination floor information.

In step S570, reminder information is sent when the acquired floor information is close or equal to the destination floor information. Specifically, the personal mobile terminal 300 may send the reminder information, for example, send reminder information of a sound and/or vibration. A passenger 90 may be reminded in time, thereby greatly improving experience of passengers.

It should be understood that the floor information acquired by the personal mobile terminal 300 is not limited to the reminder function in the foregoing embodiments, and may further be used as an information basis for developing other functions. Details are not described one by one herein.

An example of the application of the system 10 in the embodiment of the present invention is described with reference to FIG. 1 and FIG. 4.

As shown in FIG. 4, a radio signal apparatus 100-2 (for example, a BLE module) is mounted in a landing area 850 and broadcasts a Bluetooth signal or the like. A passenger 90 who enters the landing area 850 needs to establish a Bluetooth connection to the radio signal apparatus 100-2 by using a personal mobile terminal 300 carried by the passenger 90 and send a call request command by using the personal mobile terminal 300. The radio signal apparatus 100-2 may receive the command and forward the command to an elevator controller (not shown) connected to the radio signal apparatus 100-2, so as to complete a call request process. A plurality of passengers 90 may enter the landing area 850 at the same time; therefore, the foregoing call request process of each passenger 90 should be efficiently completed as soon as possible. If the radio signal apparatus 100-2 is still establishing a Bluetooth connection to the personal mobile terminal 300 of each passenger 90 that is already in the landing area 850 before to send floor information corresponding to the landing area 850, the Bluetooth connection occupies the connection capacity of the radio signal apparatus 100-2, and the implementation of a call request function by a personal mobile terminal 300 of another passenger 90 is affected or hindered.

The radio signal apparatus 100-2 continuously broadcasts an identity 200 of the radio signal apparatus 100-2. The identity 200 carries a floor information bit indicating the floor information of the landing area 850 in which the radio signal apparatus 100-2 (that is, indicating the floor information of the landing area 850). Therefore, the personal mobile terminal 300 of each passenger 90 of the landing area 850 can perform, without establishing a Bluetooth connection to the radio signal apparatus 100-2, a scan to recognize the identity broadcasted by the radio signal apparatus 100-2, and acquire, based on the floor information bit in the recognized identity, current floor information of the radio signal apparatus, that is, current floor information of the personal mobile terminal 300.

In another case, when an elevator car 800 reaches the landing area 850, especially, when a car door of the elevator car 800 and a corresponding floor door are opened, a radio signal broadcasted by the radio signal apparatus 100-2 may cover the inside of the elevator car 800. Therefore, a personal mobile terminal 300 of a passenger 90 in the elevator car 800 may also receive the identity 200 broadcasted by the radio signal apparatus 100-2. Based on the same principle, the personal mobile terminal 300 of the passenger 90 in the elevator car 800 can also acquire the floor information of the landing area 850, that is, acquire the current floor information of the personal mobile terminal 300 in the elevator car 800. Further, based on the same principle in the foregoing steps S560 and S570, the reminder function for reaching a destination floor can also be implemented.

It should be understood that as shown in FIG. 4, the foregoing radio signal apparatus 100-1 (for example, a BLE module) is further mounted in the elevator car 800.

An example of a method in an embodiment of the present invention is described below with reference to FIG. 4 and FIG. 6.

First, in step S610, an identity 200 including a floor information bit is broadcasted. In the step, the radio signal apparatus 100-2 continuously broadcasts the identity 200. It should be understood that because the radio signal apparatus 100-2 is fixedly mounted in a landing area 850 on a floor, the floor information bit "n" of the broadcasted identity 200 is relatively fixed.

In a personal mobile terminal 300, the following steps are correspondingly performed:
In step S620, the identity 200 broadcasted by the radio signal apparatus 100-2 is recognized without establishing a connection (for example, a Bluetooth connection) to the radio signal apparatus 100-2. Before the identity 200 is recognized, a scan for a radio signal broadcasted by the radio signal apparatus 100-2 may further be performed. The scan process is also completed without establishing a connection to the radio signal apparatus 100-2.

In step S630, current floor information is acquired based on the floor information bit in the recognized identity 200. As such, both a personal mobile terminal 300 in the landing area 850 and a personal mobile terminal 300 in an elevator car 800 that reaches the landing area 850 (for example, if a car door and a floor door are opened) can rapidly and conveniently acquire current floor information of the personal mobile terminal 300.

In an example of the application of the acquired floor information, the method further includes step S640. In step S640, the personal mobile terminal 300 in the elevator car 800 determines, for example, by comparing the acquired current floor information with destination floor information, whether the acquired current floor information is equal to the destination floor information.

In step S650, reminder information is sent when the acquired floor information is equal to the destination floor information. Specifically, the personal mobile terminal 300 in the elevator car 800 may send the reminder information, for example, send reminder information of a sound and/or a vibration. A passenger 90 may be reminded in time, thereby greatly improving experience of passengers.

It should be understood that the floor information acquired by the personal mobile terminal 300 is not limited to the reminder function in the foregoing embodiments, and may further be used as an information basis for developing other functions. Details are not described one by one herein again.

In the method for acquiring floor information in the foregoing embodiments, floor information can be rapidly and conveniently acquired regardless of dynamic changes of the floor information, and the connection capacity between the personal mobile terminal and the radio signal apparatus does not need to be occupied.

It should be understood that when a component is "connected" or "coupled" to another component, the component may be connected or coupled to the another component directly or via an intermediate component.

It should be understood that in block diagrams and/or flowcharts of the foregoing method, system, and apparatus according to the embodiments of the present invention, these flowchart descriptions and/or blocks of the block diagrams and combinations of the flowchart descriptions and/or block diagrams may be implemented by computer program instructions. These computer program instructions may be provided to a processor of a general purpose computer, a special purpose computer, or another programmable data processing device to produce a machine, such that these instructions, which are executed via the processor of the computer or another programmable data processing device, create components for implementing the functions/operations specified in the flowcharts and/or blocks and/or one or more procedure block diagrams.

These computer program instructions may be stored in a computer readable memory and can instruct a computer or another programmable processor to function in a particular manner, such that these instructions stored in the computer readable memory produce an article of manufacture including instruction components which implement the functions/operations specified in the flowcharts and/or one or more blocks in the block diagrams.

These computer program instructions may be loaded onto a computer or another programmable data processor to cause a series of operational steps to be performed on the computer or the another programmable data processor to produce a computer implemented process such that these instructions which are executed on the computer or the another programmable data processor provide steps for implementing the functions or operations specified in the flowcharts and/or one or more blocks in the block diagrams. It should further be noted that in some alternative implementations, the functions/operations noted in the blocks may occur out of the order noted in the flowcharts. For example, two blocks shown in succession may, in fact, be executed substantially concurrently, or these blocks may sometimes be executed in the reverse order, depending upon the functions/operations involved.

The foregoing descriptions are exemplary rather than limitative. Various non-limitative implementation solutions are disclosed herein. However, those of ordinary skill in the art will understand that various modifications and variations made according to the foregoing teachings will fall within the scope of the appended claims. Therefore, it should be understood that disclosed content other than specific disclosure can be implemented within the scope of the appended claims. Therefore, the actual scope and content should be determined by studying the appended claims.

## Claims

1. An elevator system, comprising:
elevator cars (800);
an elevator controller configured to control operation of one or more of the elevator cars (800) in the elevator system; and
a radio signal apparatus (100-01);
wherein the radio signal apparatus (100-01) is configured to broadcast an identity (200) of the radio signal apparatus (100-01), wherein the identity (200) comprises a floor information bit, and the floor information bit is used to indicate floor information of the radio signal apparatus (100-01);
**characterized in that**:
the radio signal apparatus (100-01) is mounted in an elevator car (800), and the floor information bit is configured to change as a floor on which the radio signal apparatus (100-01) is located changes.

2. The elevator system according to claim 1, wherein the radio signal apparatus (100-01) is configured to acquire, from the elevator controller, a floor on which the radio signal apparatus (100-01) is currently located.

3. The elevator system according to claim 1 or 2, wherein an identity setting unit (111) is disposed in the radio signal apparatus (100-01), and is configured to write floor information acquired from the elevator controller into the floor information bit of the identity (200).

4. The elevator system according to any preceding claim, wherein the radio signal apparatus (100-01) is a Bluetooth module or a Bluetooth Low Energy (BLE) module.

5. The elevator system of any preceding claim, further comprising a radio signal apparatus (100-2) mounted in a landing area (850); wherein the radio signal apparatus (100-2) mounted in the landing area (850) is configured to broadcast an identity (200) of the radio signal apparatus (100-2) mounted in the landing area, wherein the identity (200) comprises a floor information bit, and the floor information bit is used to indicate floor information of the radio signal apparatus (100-2) mounted in the landing area.

6. The elevator system according to claim 5, wherein the radio signal apparatus (100-2) mounted in the landing area (850) is configured to acquire, from the elevator controller, a floor on which the radio signal apparatus (100-2) mounted in the landing area is currently located.

7. The elevator system according to claim 5 or 6, wherein an identity setting unit (111) is disposed in the radio signal apparatus (100-2) mounted in the landing area (850), and is configured to write floor information acquired from the elevator controller into the floor information bit of the identity (200).

8. The elevator system according to any of claims 5-7, wherein the radio signal apparatus (100-2) mounted in the landing area (850) is a Bluetooth module or a Bluetooth Low Energy (BLE) module.

9. A method for an elevator system, comprising a step of:
broadcasting, by a radio signal apparatus (100-01), an identity (200) of the radio signal apparatus (100-01), wherein the identity (200) comprises a floor information bit used to indicate floor information of the radio signal apparatus (100-01);
**characterized in that**:
the floor information bit changes as a floor on which an elevator car (800) provided with the radio signal apparatus (100-01) is located changes.

## Patentansprüche

1. Aufzugssystem, umfassend:
Aufzugskabinen (800);
eine Aufzugssteuerung, die dazu konfiguriert ist, den Betrieb einer oder mehrerer der Aufzugskabinen (800) in dem Aufzugssystem zu steuern; und
eine Funksignalvorrichtung (100-01);
wobei die Funksignalvorrichtung (100-01) dazu konfiguriert ist, eine Identität (200) der Funksignalvorrichtung (100-01) auszusenden, wobei die Identität (200) ein Stockwerksinformationsbit umfasst und das Stockwerksinformationsbit verwendet wird, um die Stockwerksinformationen der Funksignalvorrichtung (100-01) anzugeben;
**dadurch gekennzeichnet, dass**:
die Funksignalvorrichtung (100-01) in einer Aufzugskabine (800) angebracht ist und das Stockwerksinformationsbit dazu konfiguriert ist, sich zu ändern, wenn sich ein Stockwerk, in dem sich die Funksignalvorrichtung (100-01) befindet, ändert.

2. Aufzugssystem nach Anspruch 1, wobei die Funksignalvorrichtung (100-01) dazu konfiguriert ist, von der Aufzugssteuerung ein Stockwerk abzurufen, auf dem sich die Funksignalvorrichtung (100-01) aktuell befindet.

3. Aufzugssystem nach Anspruch 1 oder 2, wobei eine Identitätseinstelleinheit (111) in der Funksignalvorrichtung (100-01) angeordnet und dazu konfiguriert ist, Stockwerksinformationen, die von der Aufzugssteuerung abgerufen wurden, in das Stockwerksinformationsbit der Identität (200) zu schreiben.

4. Aufzugssystem nach einem der vorhergehenden Ansprüche, wobei die Funksignalvorrichtung (100-01) ein Bluetooth-Modul oder ein Niedrigenergie-Bluetooth (Bluetooth Low Energy, BLE)-Modul ist.

5. Aufzugssystem nach einem der vorhergehenden Ansprüche, ferner umfassend eine Funksignalvorrichtung (100-2), die in einem Haltebereich (850) angebracht ist; wobei die in dem Haltebereich (850) angebrachte Funksignalvorrichtung (100-2) dazu konfiguriert ist, eine Identität (200) der Funksignalvorrichtung (100-2), die in dem Haltebereich angebracht ist, auszusenden, wobei die Identität (200) ein Stockwerksinformationsbit umfasst und das Stockwerksinformationsbit verwendet wird, um Stockwerksinformationen der Funksignalvorrichtung (100-2), die in dem Haltebereich angebracht ist, anzugeben.

6. Aufzugssystem nach Anspruch 5, wobei die Funksignalvorrichtung (100-2), die in dem Haltebereich (850) angebracht ist, dazu konfiguriert ist, von der Aufzugssteuerung ein Stockwerk abzurufen, auf dem sich die Funksignalvorrichtung (100-2), die in dem Haltebereich angebracht ist, aktuell befindet.

7. Aufzugssystem nach Anspruch 5 oder 6, wobei eine Identitätseinstelleinheit (111) in der Funksignalvorrichtung (100-2), die in dem Haltebereich (850) angebracht ist, angeordnet und dazu konfiguriert ist, Stockwerksinformationen, die von der Aufzugssteuerung abgerufen wurden, in das Stockwerksinformationsbit der Identität (200) zu schreiben.

8. Aufzugssystem nach einem der Ansprüche 5-7, wobei die Funksignalvorrichtung (100-2), die in dem Haltebereich (850) angebracht ist, ein Bluetooth-Modul oder ein Niedrigenergie-Bluetooth (BLE)-Modul ist.

9. Verfahren für ein Aufzugssystem, umfassend den folgenden Schritt:
Senden, durch eine Funksignalvorrichtung (100-01), einer Identität (200) der Funksignalvorrichtung (100-01), wobei die Identität (200) ein Stockwerksinformationsbit umfasst, das verwendet wird, um Stockwerksinformationen der Funksignalvorrichtung (100-01) anzugeben;
**dadurch gekennzeichnet, dass**:
das Stockwerksinformationsbit sich ändert, wenn sich ein Stockwerk, in dem sich eine mit der Funksignalvorrichtung (100-01) versehene Aufzugskabine (800) befindet, ändert.

## Revendications

1. Système d'ascenseur, comprenant :
des cabines d'ascenseur (800) ;
un dispositif de commande d'ascenseur configuré pour commander le fonctionnement d'une ou de plusieurs des cabines d'ascenseur (800) dans le système d'ascenseur ; et
un appareil de signal radio (100-01) ;
dans lequel l'appareil de signal radio (100-01) est configuré pour diffuser une identité (200) de l'appareil de signal radio (100-01), dans lequel l'identité (200) comprend un bit d'informations d'étage, et le bit d'informations d'étage est utilisé pour indiquer des informations d'étage de l'appareil de signal radio (100-01) ;
**caractérisé en ce que** :
l'appareil de signal radio (100-01) est monté dans une cabine d'ascenseur (800), et le bit d'informations d'étage est configuré pour changer lorsqu'un étage sur lequel se situe l'appareil de signal radio (100-01) change.

2. Système d'ascenseur selon la revendication 1, dans lequel l'appareil de signal radio (100-01) est configuré pour acquérir, auprès du dispositif de commande d'ascenseur, un étage sur lequel l'appareil de signal radio (100-01) est actuellement situé.

3. Système d'ascenseur selon la revendication 1 ou 2, dans lequel une unité de définition d'identité (111) est disposée dans l'appareil de signal radio (100-01), et est configurée pour écrire des informations d'étage acquises auprès du dispositif de commande d'ascenseur dans le bit d'informations d'étage de l'identité (200).

4. Système d'ascenseur selon une quelconque revendication précédente, dans lequel l'appareil de signal radio (100-01) est un module Bluetooth ou un module Bluetooth à basse consommation (BLE).

5. Système d'ascenseur selon une quelconque revendication précédente, comprenant également un appareil de signal radio (100-2) monté dans une zone de palier (850) ; dans lequel l'appareil de signal radio (100-2) monté dans la zone de palier (850) est configuré pour diffuser une identité (200) de l'appareil de signal radio (100-2) monté dans la zone de palier, dans lequel l'identité (200) comprend un bit d'informations d'étage, et le bit d'informations d'étage est utilisé pour indiquer des informations d'étage de l'appareil de signal radio (100-2) monté dans la zone de palier.

6. Système d'ascenseur selon la revendication 5, dans lequel l'appareil de signal radio (100-2) monté dans la zone de palier (850) est configuré pour acquérir, auprès du dispositif de commande d'ascenseur, un étage sur lequel l'appareil de signal radio (100-2) monté dans la zone de palier est actuellement situé.

7. Système d'ascenseur selon la revendication 5 ou 6, dans lequel une unité de définition d'identité (111) est disposée dans l'appareil de signal radio (100-2) monté dans la zone de palier (850), et est configurée pour écrire des informations d'étage acquises auprès du dispositif de commande d'ascenseur dans le bit d'informations d'étage de l'identité (200).

8. Système d'ascenseur selon l'une quelconque des revendications 5 à 7, dans lequel l'appareil de signal radio (100-2) monté dans la zone de palier (850) est un module Bluetooth ou un module Bluetooth à basse consommation (BLE).

9. Procédé pour un système d'ascenseur, comprenant une étape consistant à :
diffuser, par un appareil de signal radio (100-01), une identité (200) de l'appareil de signal radio (100-01), dans lequel l'identité (200) comprend un bit d'informations sur l'étage utilisé pour indiquer des informations d'étage de l'appareil de signal radio (100-01) ;
**caractérisé en ce que** :
le bit d'informations d'étage change lorsqu'un étage sur lequel se situe une cabine d'ascenseur (800) pourvue de l'appareil de signal radio (100-01) change.
